# FASCICULE DE BREVET EUROPEEN

(11) **EP 2 303 548 B1**
(45) Date de publication et mention de la délivrance du brevet: **24.10.2012**
(21) Numéro de dépôt: 09769540.7
(22) Date de dépôt: 26.06.2009
(51) Int. Cl.: B29C 49/48, B29C 49/54

(54) **AGENCEMENT D'UN SUPPORT DE FOND DE MOULE POUR MACHINE DE SOUFFLAGE ET MACHINE DE SOUFFLAGE COMPORTANT LE SUPPORT DE FOND**
ANORDNUNG ZUR FORMENDWANDSTÜTZE FÜR EINE BLASFORMMASCHINE UND BLASFORMMASCHINE MIT DER ENDWANDSTÜTZE
ARRANGEMENT OF A MOULD END-WALL SUPPORT FOR A BLOW-MOULDING MACHINE, AND BLOW-MOULDING MACHINE COMPRISING SAID END-WALL SUPPORT

(30) Priorité: 27.06.2008 FR 0803610
(43) Date de publication de la demande: 06.04.2011
(73) Titulaire: SIDEL PARTICIPATIONS, 76930 Octeville-sur-Mer (FR)
(72) Inventeur: LANGLOIS, Jean-Christophe, F-76930 Octeville-sur-mer (FR)
(74) Mandataire: Cabinet Plasseraud
(86) Numéro de dépôt international: PCT/FR2009/051232
(87) Numéro de publication internationale: WO 2009/156699

(56) Documents cités:
- FR-A- 2 902 688
- GB-A- 2 141 662
- US-A- 4 871 507
- US-A1- 2004 202 746
- DATABASE WPI Week 200358 Thomson Scientific, London, GB; AN 2003-610773 XP002516776 -& JP 2003 025419 A (MITSUBISHI PLASTICS IND LTD) 29 janvier 2003 (2003-01-29)

## Description

La présente invention concerne un perfectionnement apporté aux machines de soufflage d'articles du genre bouteilles, en matériau thermoplastique et, plus particulièrement, un perfectionnement à une partie du moule qui est utilisé sur ce type de machines.

Elle concerne en fait un perfectionnement apporté au support de la partie qui constitue le fond de moule, c'est-à-dire la partie sur laquelle est sculptée l'empreinte du cul de la bouteille.

Les machines de soufflage, comme celles décrites dans les documents US 20040202746, WO2006/010706 et US 6 948 924, comportent plusieurs unités de moulage qui sont installées sur un carrousel tournant et chaque unité comprend une console qui porte le moule.

De façon traditionnelle, le moule est constitué de deux demi-moules, du type portefeuille ou autre, et d'un fond de moule qui est porté par un support, lequel support est pris en charge par les demi-moules qui se referment sur lui, et en particulier sur ledit fond de moule, pour le maintenir verrouillé pendant l'opération de moulage de la bouteille par étirage-soufflage.

Toutes ces machines requièrent des interventions diverses qui doivent pouvoir se faire rapidement et surtout dans de bonnes conditions pour le ou les opérateurs.

Parmi ces interventions on trouve notamment les révisions périodiques mais aussi, dans le cas de machines polyvalentes qui peuvent fabriquer plusieurs types de bouteilles dans une même journée, on trouve des opérations qui consistent à changer les modèles de moules, tout au moins les empreintes qui façonnent les bouteilles fabriquées sur ces machines. C'est ainsi que des opérateurs peuvent avoir à changer des dizaines de fonds de moule et, bien sûr, les supports qui portent ces fonds.

Le changement de modèles de moules doit pouvoir se faire rapidement et c'est pourquoi on trouve, pour les supports de fonds de moule, un dispositif d'assemblage rapide interposé entre ces derniers et l'unité porte-moules; ce dispositif d'assemblage rapide, tel que décrit dans le document FR 2 902 688, facilite ces changements de modèles de moules.

Toutes les interventions sur les machines de soufflage, comme cette opération de changement des supports de fonds de moule, sont réalisées dans des conditions relativement difficiles pour le ou les opérateurs en raison, notamment, de la température ambiante qui règne au niveau de la machine.

La température est souvent relativement élevée, pouvant dépasser la centaine de degrés Celsius; elle provient surtout de la diffusion de la température de la préforme qui est introduite à très haute température dans chaque moule de la machine pour subir son traitement d'étirage-soufflage afin de donner forme à un article du genre bouteille ou autres.

Les difficultés liées à cette opération de changement des supports de fonds de moule sont également accrues en raison, d'une part, de la température du support lui-même et, d'autre part, de son poids qui, vu le nombre de pièces à changer sur une machine de soufflage, une trentaine parfois par exemple, finit par représenter une charge importante pour l'opérateur.

Par ailleurs, la manipulation de ces pièces qui constituent les moules est une opération qui requiert beaucoup de soins pour éviter toute dégradation qui rendrait ces moules inutilisables.

La présente invention defini par les revendications propose un aménagement au niveau du support de fond de moule qui permet d'apporter une solution définitive aux problèmes indiqués ci-dessus.

L'un des premiers buts visés par l'invention est de réduire les transferts de chaleur entre le support de fond de moule et le reste de la machine pour améliorer le confort des opérateurs qui sont chargés d'intervenir sur ladite machine, quel que soit le type d'intervention.

Un autre but de l'invention est d'améliorer le confort du ou des opérateurs chargés, par exemple, de manipuler des supports de fonds de moule sur la machine de soufflage lorsque la machine est aménagée pour réaliser des séries de bouteilles de formes et/ou de formats différents; dans ce cas, l'invention permet d'améliorer le confort du ou des opérateurs aussi bien sur le plan de la température ambiante que sur le plan de la température des supports de fonds de moule à manipuler.

Un autre but de l'invention est de diminuer le poids unitaire des supports de fonds de moules afin de réduire, d'une part, pour l'opérateur, la charge totale à manipuler lors de son intervention pour le changement desdits fonds de moule et, d'autre part, pour la machine, la masse que représentent ces supports de fonds de moule et qui est embarquée sur la partie tournante de ladite machine.

La conception générale du support permet aussi d'améliorer les conditions de refroidissement de l'empreinte des fonds de moule grâce, notamment, à l'aménagement apporté d'une manière générale aux supports desdits fonds de moule.

L'aménagement selon l'invention améliore également la durée de vie du fond de moule ; elle améliore, notamment, la durée de vie des fonds de moule réalisés en aluminium qui sont traditionnellement associés à un support en acier, par exemple, et dans lesquels fonds circule un liquide de refroidissement, comme de l'eau. On observe en effet que l'invention supprime la détérioration des fonds de moule en aluminium.

Dans la suite du texte, le fond de moule désigne la partie du moule qui est sculpté, c'est-à-dire la partie qui comporte l'empreinte du fond de l'article à façonner ; en d'autres termes, le fond de moule correspond à la partie du moule qui permet de façonner le cul de la bouteille, par exemple.

Le support du fond de moule, selon l'invention, est interposé entre ledit fond de moule et la sellette qui est solidaire de la console, ou bâti, et ce support comporte au moins une pièce en matériau isolant pour réaliser une rupture de pont thermique entre ledit fond et la sellette de l'unité porte-moule, et pour supprimer la corrosion galvanique dudit fond.

Selon une disposition préférentielle de l'invention, la pièce isolante est réalisée en matériau plastique du type copolymère acétal et en particulier un polyacétal connu sous la dénomination POM naturel.

Toujours selon l'invention, le fond de moule comporte un circuit pour le passage d'un fluide caloporteur et ce circuit est taillé en colimaçon, ou autre, dans l'épaisseur dudit fond ; il est en fait taillé dans la face qui est opposée à celle qui comporte l'empreinte du cul de la bouteille.

Ce circuit du fluide caloporteur est masqué et fermé de façon étanche par un couvercle qui comporte un conduit d'amenée et un conduit de retour dudit fluide caloporteur et ce couvercle, interposé entre le fond de moule et la sellette, constitue la pièce isolante pour, d'une part, introduire une rupture de pont thermique entre ledit fond de moule et ladite sellette et, d'autre part, pour garantir un meilleur échange thermique au niveau dudit fond de moule avec ledit fluide caloporteur.

L'invention permet aussi d'améliorer la durée de vie du fond de moule et en particulier celle des fonds de moule qui sont réalisés en aluminium et qui sont associés à un support en matériau ferreux. En effet, la présence de la pièce isolante supprime les phénomènes de pile et, par conséquent, l'électrolyse qui découle de la circulation de l'eau de refroidissement dans ledit fond de moule, laquelle électrolyse entraîne, en effet, une corrosion galvanique de ces fonds de moule en aluminium.

Selon une autre disposition de l'invention, le couvercle du fond de moule est usiné et comporte un décolletage faisant office de siège pour accueillir une bague de verrouillage qui coopère avec des segments en arc de cercle disposés sur les demi-moules, laquelle bague de verrouillage est également réalisée en matériau isolant.

En fait, cette bague de verrouillage assure plusieurs fonctions techniques ; elle constitue une barrière thermique et, en plus, elle assure le centrage du support par rapport aux demi-moules et elle supporte la pression qui s'exerce sur le fond de moule lors de l'opération de soufflage de la bouteille.

De préférence, cette bague de verrouillage est réalisée en matériau polymère thermoplastique moulé du type PEI (polyétherimide), PPS (polyphénylènesulfide, ou autre. Elle permet également de supprimer l'opération répétitive de graissage qui consiste à appliquer un lubrifiant sur les pièces des demi-moules avec lesquelles elle coopère et qui génèrent un frottement au moment de la fermeture et de l'ouverture du moule.

Toujours selon l'invention, le support comporte, entre le couvercle du fond de moule et la sellette solidaire de la console, une entretoise qui permet, d'une part, de modifier la configuration du support et, d'autre part, d'adapter la position dudit fond de moule à celle des demi-moules lors d'un changement de formes et/ou de dimensions des articles à façonner sur la machine, laquelle entretoise peut également être réalisée en matériau plastique isolant, du type POM naturel, par exemple.

Selon une autre disposition de l'invention, dans le cas d'un support du fond de moule qui comprend:
- une partie "fixe" comportant un socle fixé sur la sellette qui est elle-même solidaire de la console de l'unité porte-moule,
- une partie amovible, interchangeable, qui coopère avec les demi-moules,
- des moyens pour assembler les deux parties,
ladite partie amovible faisant office de support interchangeable étant au moins constituée :
- d'une embase qui coopère avec ledit socle de la partie fixe,
- d'un couvercle sur lequel est fixé le fond de moule,
ledit support interchangeable comprend au moins une pièce isolante qui fait office de rupture de pont thermique entre, d'une part, ledit fond et, d'autre part, ladite embase.

Toujours selon l'invention, dans le cas d'un support de fond de moule réalisé en deux parties, la pièce isolante qui fait office de rupture de pont thermique est soit constituée par le couvercle dudit fond de moule, soit par l'entretoise, soit par les deux, c'est-à-dire par ledit couvercle et par ladite entretoise, lequel couvercle peut aussi, selon le cas, être aménagé pour servir de siège à la bague de verrouillage rapportée afin d'assurer l'ancrage dudit fond de moule sur les demi-moules.

Selon une autre disposition de l'invention, l'entretoise comporte, d'une part, un canal central qui permet d'amener le fluide caloporteur directement au centre du fond de moule, à travers le couvercle, et à partir de l'embase, et, d'autre part, plusieurs canaux qui sont parallèles audit canal central et l'un au moins de ces canaux est utilisé pour le retour du fluide caloporteur.

Selon une autre disposition de l'invention, une semelle métallique d'assemblage est interposée, d'une part, entre le couvercle du fond et l'entretoise et, d'autre part, entre l'entretoise et l'embase qui se fixe sur le socle.

Mais l'invention sera encore détaillée à l'aide de la description suivante et des dessins annexés, donnés à titre indicatif, et dans lesquels:
- la figure 1 montre, au moyen d'une coupe schématique selon un plan passant par l'axe du moule, un premier exemple de support de fond de moule selon l'invention, avec le couvercle réalisé en matériau plastique isolant,
- la figure 2 montre, en coupe, un ensemble constitué, d'une part, d'un couvercle réalisé en matériau plastique et, d'autre part, d'une bague de verrouillage réalisée elle aussi en matériau plastique,
- la figure 3 montre, en perspective, le couvercle qui est aménagé pour accueillir la bague de verrouillage,
- la figure 4 montre, en perspective également, la bague de verrouillage,
- la figure 5 montre, en coupe schématique, toujours selon un plan passant par l'axe du moule, un support de fond de moule qui comprend une entretoise faisant office d'adaptateur pour les changements de format des articles à façonner, laquelle entretoise est, elle aussi, réalisée en matériau plastique isolant,
- la figure 6 montre, toujours en coupe schématique, un autre mode de réalisation d'un support de fond de moule isolant, lequel support utilise le dispositif d'assemblage rapide décrit dans le document FR 2 902 688 précité,
- la figure 7 est une coupe selon 7-7 de la figure 8 montrant un support de fond de moule avec une entretoise et avec le dispositif d'assemblage rapide précité,
- la figure 8 est une coupe selon 8-8 de la figure 7, montrant l'entretoise et en particulier la répartition de ses différents canaux.

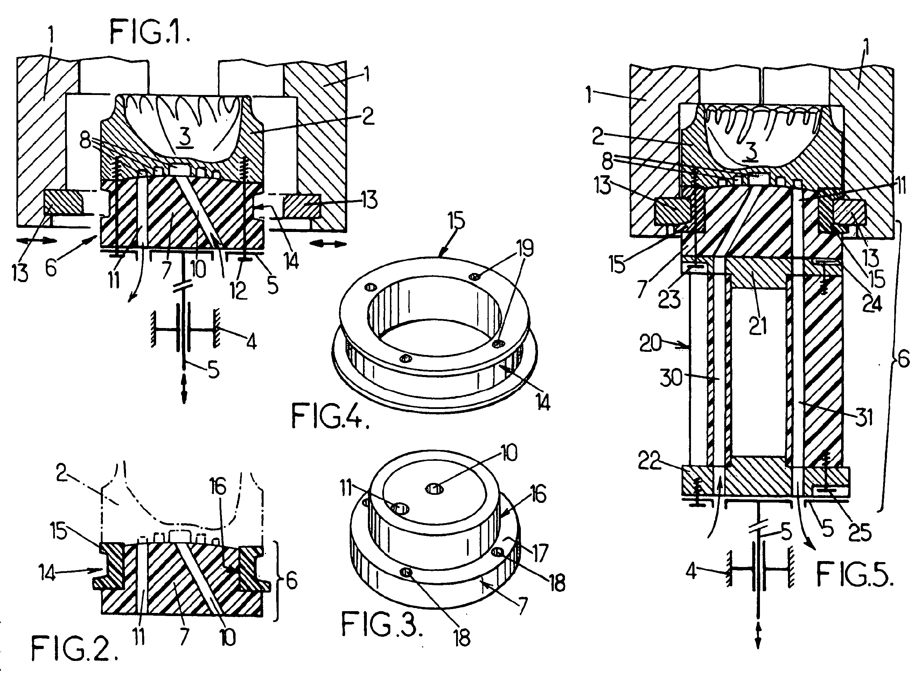

La figure 1 montre les éléments constitutifs du moule à savoir les demi-moules (1) représentés partiellement et le fond (2) de moule dont la surface supérieure comporte, sous la forme d'une sculpture réalisée en creux, l'empreinte (3) du cul de l'article qui sera façonné dans ledit moule comme, par exemple, une bouteille.

Ce moule fait partie de ce que l'on appelle une unité porte-moule et, généralement, une machine de soufflage comporte plusieurs dizaines d'unités porte-moules, toutes disposées radialement sur un carrousel qui n'apparaît pas sur la figure.

Les éléments constitutifs du moule sont portés par une console (4) faisant office de bâti, laquelle console (4) est solidaire du carrousel de la machine. Cette console (4) peut soutenir le fond (2) directement mais, généralement, comme montré dans les documents WO2006/010706 et US 6 948 924 précités, elle comporte une sellette (5) sur laquelle est fixé le support (6) du fond (2) de moule, laquelle sellette (5) est mobile verticalement sous l'effet de moyens de commande appropriés, guidée par rapport à ladite console (4).

Plusieurs versions de ce support (6) du fond (2) sont représentées sur les différentes figures. Dans toutes les versions, le support (6) comporte au moins une partie qui fait office de pièce d'isolation et de rupture de pont thermique entre ledit fond (2) et la sellette (5) pour éviter la transmission de chaleur du moule vers la console (4) et, d'une manière générale, à la structure de la machine de soufflage. Cette pièce isolante, qui sera détaillée au fur et à mesure de la description des différents modes de réalisation est, de préférence, réalisée en matériau plastique comme, par exemple, un matériau du type copolymère acétal et en particulier un polyacétal connu sous la dénomination POM naturel.

Le support (6), représenté figure 1, est constitué d'une pièce unique, appelée couvercle (7) dans la suite du texte. Ce couvercle (7) s'interpose entre la sellette (5) et le fond (2) de moule et il est en contact avec la surface inférieure du fond (2) de moule, laquelle surface, opposée à celle qui porte l'empreinte du cul de la bouteille, comporte, taillé dans son épaisseur et en forme de colimaçon, ou autre, un circuit (8) qui permet le passage d'un fluide caloporteur.

La surface supérieure du couvercle (7) est en contact avec le fond (2) de moule et fait office de paroi, ou de masque, pour fermer, de façon étanche, le circuit (8) en colimaçon. Ce couvercle (7) constitue donc le support (6) du fond (2) de moule et il comporte des conduits (10) et (11) pour l'arrivée et pour le retour, respectivement, du fluide caloporteur. Le conduit (10) amène le fluide caloporteur au centre du fond (2), dans le point de départ du circuit (8) en colimaçon, sous l'empreinte (3). Le conduit (11) de retour se situe à l'extrémité du circuit (8) en colimaçon.

Les deux conduits (10) et (11) sont reliés à des tubulures, non représentées, à travers la sellette (5), par exemple.

Le fond (2) est fixé sur le couvercle (7) au moyen de vis (12) qui, dans ce cas de figure, constituent en même temps les moyens d'assemblage dudit couvercle (7), c'est-à-dire du support (6), sur la sellette (5).

Comme mentionné précédemment, le support (6) est pris en charge par les demi-moules (1) avant l'opération de moulage et sa position est verrouillée par ces derniers. Cette prise en charge permet de placer le fond (2) en correspondance avec les demi-moules (1) et d'assurer une continuité au niveau des surfaces qui vont façonner la paroi de l'article soufflé, en l'occurrence une bouteille.

Les demi-moules (1) comportent, à leur partie inférieure, des segments (13) en forme d'arc de cercle, qui coopèrent chacun avec une gorge (14) aménagée, par exemple, directement sur le support (6) du fond (2) de moule et en particulier, dans le cas de la figure 1, dans la périphérie du couvercle (7) qui constitue ledit support (6).

Lorsque les demi-moules (1) se referment, le support (6) est prisonnier, pris entre les deux demi-moules (1), et le fond (2) de moule est en place pour l'opération de moulage par soufflage.

Grâce à cette construction du support (6), et en particulier à la présence du couvercle (7), la sellette (5) est isolée thermiquement du fond (2) de moule ainsi que des deux demi-moules (1), lequel couvercle (7) étant réalisé, comme précisé auparavant, en matériau plastique.

Ce couvercle (7) permet aussi d'éviter les phénomènes de pile qui entraînent une corrosion galvanique du fond (2) en matériau du type aluminium. Le couvercle (7) fait office d'isolant et il permet d'éviter l'électrolyse créée par le passage du fluide caloporteur, de l'eau bien souvent, comme c'est le cas lorsque le couvercle est réalisé en matériau ferreux.

La prise en charge du support (6) par les deux demi-moules (1) peut également se faire par le biais d'une pièce complémentaire qui coopère avec les segments (13) desdits demi-moules (1) pour verrouiller ledit support (6) avec ces derniers.

Cette pièce complémentaire de verrouillage, visible figure 2, se présente sous la forme d'une bague (15) qui est réalisée en matériau plastique pour assurer également une isolation thermique. Cette bague (15) est, de préférence obtenue par moulage d'un copolymère thermoplastique technique pour assurer la fonction de centrage et d'assemblage du support avec les deux demi-moules (1).

A titre d'exemple, la bague (15) est réalisée avec un matériau thermoplastique moulé par injection du type PEI (polyétherimide), PPS (polyphénylènesulfide), ou autre. Cette bague (15) permet de bénéficier d'une pièce extrêmement fiable et, à la longue, plus économique qu'une pièce d'usure réalisée en métal.

Cette bague (15) comporte la même gorge (14) que celle représentée figure 1, laquelle gorge (14) coopère avec les segments (13) disposés sur chaque demi-moule (1), comme détaillé précédemment.

Cette bague (15) de verrouillage s'enfile sur le couvercle (7) qui comporte un aménagement à cet effet, lequel aménagement peut consister en un usinage sous forme de décolletage (16) situé à la périphérie supérieure dudit couvercle (7). De cette façon, la bague (15) se positionne entre l'épaulement (17) du décolletage (16), qui forme un siège, et la surface inférieure du fond (2), laquelle surface inférieure dudit fond peut aussi comporter un usinage en forme de décolletage qui permet de centrer ledit fond (2) par rapport au couvercle (7), par l'intermédiaire de ladite bague (15).

Ces trois éléments : le fond (2), la bague (15) et le couvercle (7), peuvent être assemblés ensemble et avec la sellette (5) par les vis (12) qui apparaissent figure 1.

Sur les figures 2 à 4, on trouve le détail du couvercle (7) et de la bague (15) de verrouillage. Sur les figures 2 et 3, le couvercle (7) apparaît avec ses conduits (10) et (11) qui permettent le passage du fluide caloporteur. Des perçages (18) et (19) apparaissent figures 3 et 4; ces perçages (18) et (19) sont positionnés respectivement sur le couvercle (7) et sur la bague (15) pour permettre le passage des vis (12).

La bague (15), lorsqu'elle est réalisée en matériau plastique, peut aussi contribuer à l'isolation des différentes parties du moule. Elle présente, dans ce cas, une certaine souplesse et surtout une certaine élasticité qui la rendent plus résistante à l'usure que les mêmes bagues réalisées en métal.

Par ailleurs, cette bague (15), réalisée en matériau isolant, peut aussi être utilisée sur un support métallique classique ou sur un support (6) comprenant plusieurs pièces dont l'une ou l'autre est une pièce isolante, comme détaillé plus loin sur les figures suivantes. Dans tous les cas, la bague (15) permet de s'affranchir des opérations régulières de graissage grâce à ses propriétés autolubrifiantes.

La figure 5 montre un support (6) constitué de plusieurs pièces superposées; il comprend notamment une entretoise (20) interposée entre le couvercle (7) et la sellette (5). Cette entretoise (20) permet, notamment, d'adapter la position du fond (2) par rapport aux demi-moules (1) lorsqu'il y a un changement de format du moule.

Cette entretoise (20) s'étend entre deux semelles: - une semelle (21) supérieure qui est interposée entre ladite entretoise (20) et le couvercle (7) et - une semelle (22) inférieure qui se situe entre ladite entretoise (20) et la sellette (5). Les deux semelles (21) et (22) sont de préférence réalisées en alliage léger ; elles assurent, de façon classique, la fixation des différents éléments entre eux, depuis la sellette (5) jusqu'au fond (2) au moyen de plusieurs vis (23, 24 ,25).

L'entretoise (20) peut aussi constituer la pièce d'isolation du support (6) et être façonnée par extrusion ou moulage. Elle est alors réalisée en matériau plastique du genre polyacétal, le même matériau que celui dont il a été question auparavant pour le couvercle (7).

Le support (6) peut comporter une ou plusieurs pièces d'isolation faisant office de rupture de pont thermique. 11 peut comporter, comme mentionné plus haut, une partie isolante qui est constituée soit du couvercle (7), soit de l'entretoise (20), soit des deux pièces.

Dans tous les cas, la bague (15) du couvercle (7) peut aussi être réalisée en matériau plastique, du type polyétherimide, et assurer une isolation entre les demi-moules (1) et le support (6).

L'entretoise (20) et les deux semelles (21) et (22) comportent des conduits (30) et (31) qui se situent dans le prolongement des conduits (10) et (11) du couvercle (7) pour le passage du fluide caloporteur.

L'utilisation de pièce(s) isolante(s), et la rupture de pont thermique entre le fond (2) et la sellette (5), permettent d'apporter, au niveau dudit fond (2), un fluide caloporteur efficace, dont la température, d'une manière générale, reste constante. De plus l'accès du fluide caloporteur au centre du fond (2) est relativement direct et il peut d'ailleurs être amélioré avec les dispositions constructives détaillées ci-après.

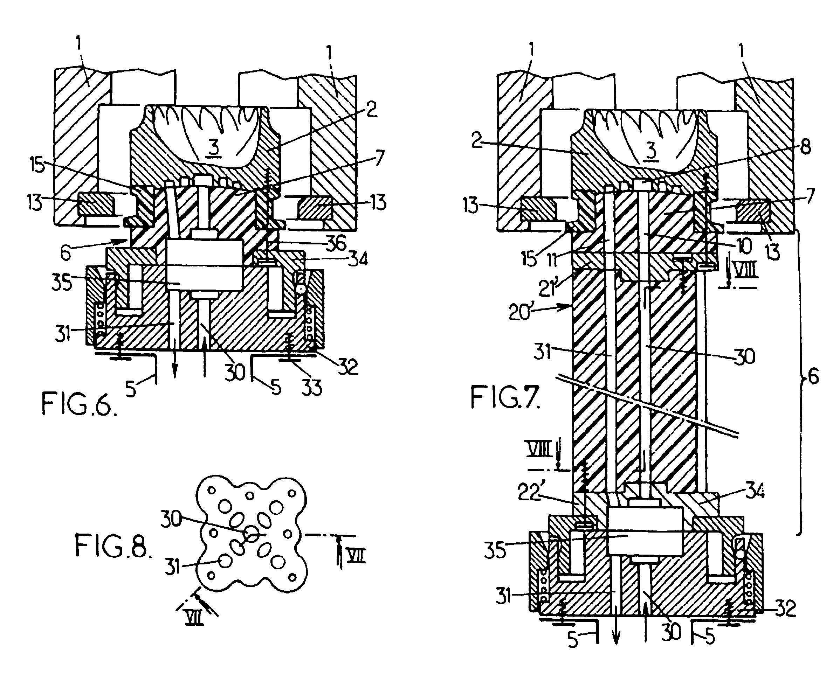

Les figures 6 et 7 montrent une variante de réalisation du support (6) selon l'invention, qui comprend un dispositif d'assemblage rapide interposé entre ledit support et la sellette (5).

Ce dispositif d'assemblage rapide, décrit dans le document FR 2 902 688 précité, permet d'améliorer les temps d'intervention pour le changement des fonds (2) de moule. Il est constitué - d'un socle (32) qui se fixe sur la sellette (5) au moyen de vis (33) et - d'une embase (34) en forme de jupe, laquelle jupe reçoit les éléments constitutifs du support (6) qui ont été détaillés auparavant.

Ce dispositif d'assemblage rapide comprend aussi des conduits pour le passage du fluide caloporteur et un connecteur (35) fluidique, simplement schématisé sur les figures, qui fait office de raccord rapide entre les conduits (30) d'arrivée et les conduits (31) de retour situés sur l'une et l'autre partie dudit dispositif d'assemblage rapide.

Le support (6), représenté figure 6, est constitué du couvercle (7) et de l'embase (34) du dispositif d'assemblage rapide. Ce couvercle (7) est réalisé en matériau plastique, comme décrit précédemment en liaison avec la figure 1 ou la figure 2 notamment. L'assemblage des différents éléments constitutifs du support (6), c'est-à-dire le fond (2) de moule, le couvercle (7), la bague (15) éventuellement et l'embase (34), s'effectue au moyen de vis (36).

La figure 7 montre un support (6) qui comprend une entretoise (20') dont l'aménagement diffère sensiblement de celui de l'entretoise précédente représentée figure 5. Cette entretoise (20'), dont la section est représentée figure 8, est obtenue, comme l'entretoise (20) par extrusion ou par moulage et elle comporte plusieurs canaux dont deux sont utilisés pour le passage du fluide caloporteur : - le canal central (30) et - un canal (31) latéral. Les autres canaux permettent d'alléger la pièce et/ou constituent des passages pour d'autres besoins.

Comme pour le mode de réalisation décrit précédemment, figure 5, cette entretoise (20') s'étend entre deux semelles : - une semelle (21') supérieure qui est interposée entre ladite entretoise (20') et le couvercle (7) et - une semelle (22') inférieure qui se situe entre ladite entretoise (20') et la sellette (5). Les deux semelles (21') et (22') sont de préférence réalisées en alliage léger ; elles permettent de réaliser la fixation des différents éléments entre eux, depuis la sellette (5) jusqu'au fond (2) du moule au moyen de plusieurs vis.

## Revendications

1. Agencement d'un support de fond de moule pour une machine de soufflage d'articles en matériau thermoplastique qui est équipée de plusieurs unités de moulage disposées sur un carrousel et dont chacune de ces unités comprend une console (4) faisant office de bâti pour porter le moule proprement dit et en particulier un moule constitué de deux demi-moules (1) et dudit fond (2) de moule, l'agencement comprenant:
- un fond (2) de moule,
- une sellette (5) qui est solidaire de une console (4),
- un support (6) de moule étant interposé entre ledit fond (2) de moule et la sellette (5), **caractérisé en ce que**
- ledit support (6) comporte au moins une pièce en matériau isolant, interposée entre ledit fond (2) de moule et ladite sellette (5) pour réaliser une rupture de pont thermique entre les deux, et
- **en ce que** ladite au moins une pièce en matériau isolant comprend un couvercle (7) réalise d'une pièce en contact avec ledit fond de moule.

2. Agencement selon la revendication 1, **caractérisé en ce qu'**il comporte une pièce isolante réalisée en matériau plastique du type copolymère acétal et en particulier un polyacétal connu sous la dénomination POM naturel.

3. Agencement selon la revendication 2, **caractérisé en ce que** ledit fond (2) comporte un circuit (8) pour le passage d'un fluide caloporteur, lequel circuit (8), taillé en colimaçon dans son épaisseur, du côté opposé à la surface sculptée, est masqué par ledit couvercle (7) qui comporte un conduit (10) d'arrivée et un conduit (11) de retour, dudit fluide caloporteur, lequel couvercle (7), interposé entre ledit fond (2) et la sellette (5), constitue la pièce isolante dudit support pour, d'une part, introduire une rupture de pont thermique entre ledit fond (2) sculpté et la sellette (5) et, d'autre part, pour garantir un meilleur échange thermique au niveau dudit fond (2) avec ledit fluide caloporteur.

4. Agencement selon la revendication 3, **caractérisé en ce que** le couvercle (7) du fond (2) de moule comporte un usinage en forme de décolletage (16) pour loger une bague (15) qui coopère avec des segments (13) en arcs de cercle disposés sur les demi-moules afin de verrouiller ledit fond (2) de moule avec ces derniers, laquelle bague (15) de verrouillage est également réalisée en matériau plastique isolant.

5. Agencement selon la revendication 4, **caractérisé en ce que** la bague (15) est constituée d'un matériau thermoplastique du type PEI (polyétherimide).

6. Agencement selon la revendication 4, **caractérisé en ce que** la bague (15) est constituée d'un matériau du type PPS (polyphénylènesulfïde).

7. Agencement selon l'une quelconque des revendications 3 ou 4, **caractérisé en ce qu'**il comporte, entre le couvercle (7) du fond (2) de moule et la sellette (5), une entretoise (20, 20') qui permet de modifier la configuration dudit support et de l'adapter au type de moule lors d'un changement de formes et/ou de dimensions des articles à façonner, laquelle entretoise (20, 20') peut également être réalisée en matériau plastique isolant, du type POM naturel, par exemple.

8. Agencement selon la revendication 1, **caracterisé en ce que** ledit support comprenant:
- une partie "fixe" comportant un socle (32) fixé sur une sellette (5) qui est elle-même solidaire d'une console (4) de l'unité porte-moule,
- une partie amovible, interchangeable, qui coopère avec des demi-moules (1) du moule,
- des moyens pour assembler les deux parties,
ladite partie amovible faisant office de support interchangeable étant au moins constituée :
- d'une embase (34) qui coopère avec ledit socle (32) de ladite partie fixe,
- d'un couvercle (7) sur lequel est fixé un fond (2)
et dans lequel ladite partie interchangeable comprend au moins une pièce isolante qui fait office de rupture de pont thermique entre, d'une part, ledit fond (2) et, d'autre part, ladite embase (34),
**et en ce que** ladite au moins une pièce en matériau isolant comprend ledit couvercle (7) qui est réalisé d'une pièce.

9. Agencement selon la revendication 8, **caractérisé en ce qu'**il comporte en outre une pièce isolante constituée par une entretoise (20, 20').

10. Agencement selon la revendication 9, **caractérisé en ce que** l'entretoise (20') est munie, d'une part, d'un canal (30) central qui permet d'amener le fluide caloporteur directement au centre du fond (2) de moule à travers le couvercle (7) et à partir de l'embase (34) et du socle (32), et , d'autre part, de plusieurs canaux qui sont parallèles audit canal (30) central et l'un au moins de ces canaux, le canal (31), est utilisé pour le retour du fluide caloporteur.

11. Agencement selon l' une quelconque des revendications 9 ou 10, **caractérisé en ce qu'**il comporte des semelles (21 ', 22') métalliques d'assemblage qui sont respectivement interposées entre, d'une part, le couvercle (7) du fond (2) de moule et l'entretoise (20, 20') et, d'autre part, entre cette dernière et, selon le cas, la sellette (5) ou l'embase (34) qui se fixe sur le socle (32).

12. Agencement l'une quelconque des revendications 8 à 11, dans lequel le couvercle (7) est aménagé pour servir de siège à une bague (15) de verrouillage dudit fond (2) de moule sur les deux demi-moules (1).

13. Machine de soufflage équipée de plusieurs unités de moulage disposées chacune sur une console qui porte le moule et en particulier un moule constitué de deux demi-moules (1) et d'un fond (2) de moule, lequel fond (2) de moule est porté par l'intermédiaire d'un support (6) qui est lui-même fixé sur une sellette (5) solidaire de ladite console (4), **caractérisée en ce que** l'une au moins desdites unité de moulage comporte un agencement selon l'une quelconque des revendications un agencement à 12.

## Claims

1. An arrangement of a mold end-wall support for a blow-moulding machine for items made of thermoplastic material which is equipped with multiply moulding units arranged on a carousel and in which each of these units comprises a bracket (4) acting as a frame to support the actual mould and in particular a mould constituted of two half-moulds (1) and said mould end-wall (2), said arrangement comprising:
- a mould end-wall (2),
- a mounting plate (5) which is integrated with a bracket (4),
- a mould support (6) being interposed between said mould end-wall (2) and the mounting plate (5),
**characterized in that**
- said support (6) comprises at least one part of insulating material, interposed between said mould end-wall (2) and said mounting plate (5) in order to form a thermal bridge break between the two and,
- **in that** said at least one part of insulating material comprises a cover (7) made of a part in contact with said mould end-wall.

2. The arrangement according to claim 1, **characterized in that** it comprises an insulating part made of plastic material such as acetal copolymer and in particular a polyacetal known as natural POM.

3. The arrangement according to claim 2, **characterized in that** said end-wall (2) comprises a circuit (8) for the passage of a heat transfer fluid, said circuit (8), cut in a spiral within said end-wall in the side opposite the surface with the cavity, being covered by said cover (7) which comprises a. delivery pipe (10) and a return pipe (11) for said heat transfer fluid, which cover (7), interposed between said end-wall (2) and the mounting plate (5), constitutes the insulating part of said support in order, on the one hand, to introduce a thermal bridge break between said cut end-wall (2) and the mounting plate (5), and, on the other hand, to guarantee a better heat exchange between said end-wall (2) and the heat transfer fluid.

4. The arrangement according to claim 3, **characterized in that** the cover (7) of the mould end-wall (2) comprises a turned portion (16) for seating a ring (15) which cooperates with segments (13) circularly arranged in arcs on the half-moulds in order to lock said mould end-wall (2) with said half-moulds, said lock ring (15) also being made of insulating plastic material.

5. The arrangement according to claim 4, **characterized in that** the ring (15) is made of a thermoplastic material such as PEI (polyetherimide).

6. The arrangement according to claim 4, **characterized in that** the ring (15) is made of a material such as PPS (polyphenylene sulfide).

7. The arrangement according to either of claims 3 or 4, **characterized in that** it comprises, between the cover (7) of the mould end-wall (2) and the mounting plate (5), a spacer (20, 20') which allows modifying the configuration of said support and adapting it to the type of mould when changing the shapes and/or dimensions of the items to be moulded, it being also possible for said spacer (20, 20') to be made of an insulating plastic material, such as natural POEM for example.

8. The arrangement according to claim 1, **characterized in that** said support comprises:
- a "fixed" part comprising a pedestal (32) attached to the mounting plate (5) which itself is integrated with a bracket (4) of the mould carrier unit,
- an interchangeable, removable part, which cooperates with half-moulds (1) of the mould,
- a means for assembling the two parts,
with said removable part acting as an interchangeable support comprising at least:
- a collar (34) which cooperates with said pedestal (32) of said fixed part,
- a cover (7) to which said mould end-wall (2) is fixed, and
wherein said interchangeable part comprises at least one insulating part which acts as a thermal bridge break between, on the one hand, said end-wall (2) and on the other hand said collar (34), and **in that** said at least one part of insulating material comprises said cover (7) made of a single part,

9. The arrangement according to claim 8, **characterized in that** it further comprises an insulating part consisting of a spacer (20, 20').

10. The arrangement according to claim 9, **characterized in that** the spacer (20') has, on the one hand, a central channel (30) for carrying the heat transfer fluid directly to the center of the mould end-wall (2) through the cover (7) and from the collar (34) and the pedestal (32), and, on the other hand, several chancels parallel to said central channel (30), with at least one of these channels, channel (31), being used for the return of the heat transfer fluid.

11. The arrangement according to either of claims 9 or 10, **characterized in that** it comprises metal plates (21', 22') for assemble which are respectively interposed between, on the one hand, the cover (7) of the mould end-wall (2) and the spacer (20, 20'), and, on the other hand, between the latter and, depending on the case, the mounting plate (5) or the collar (34) which is attached to the pedestal (32).

12. The arrangement according to any one of claims 8 to 11, **characterized in that** the cover (7) is arranged to act as a seating for a ring (15) that locks said mould end-wall (2) onto the two half-moulds (1).

13. A blow-moulding machine equipped with several molding units each arranged on a bracket which supports the mould and in particular a mould consisting of two half-moulds (1) and a mould end-wall (2), said mould end-wall (2) being supported by means of a support (6) which itself is attached to a mounting plate (5) integrated with said bracket (4), **characterized in that** at least one of said moulding units comprises an arrangement according to anyone of claims 1 to 12.

## Patentansprüche

1. Bodenunterstützungsanordnung einer Form von einer Elasformmaschine für Artikel aus thermoplastischem Material, die mit mehreren Formeinheiten ausgestattet ist, die auf einem Karussell angeordnet sind und von denen, jede der Einheiten einen Träger (4) aufweist, der als Tragelement dient, um die eigentliche Form zu tragen und insbesondere eine Form, die aus zwei Formhälften (1) und dem Formboden (2) gebildet wird, wobei die Anordnung aufweist:
- einen Formboden (2),
- eine Gleitschlittert (5), der mit einem Träger (4) verbunden ist,
- eine Formunterstützung (6), die zwischen dem Formboden (2) und dem Gleitschlitten (5) eingefügt ist,
**dadurch gekennzeichnet,**
- **dass** die Unterstützung (6) mindestens ein Stück aus isolierendem Material auf weist, das zwischen dem Formboden (2) und dem Gleitschlitten (5) eingefügt ist, um eine Unterbrechung der Wärmebrücke zwischen den zweien umzusetzen, und
- **dass** das mindestens eine Stück isolierende Material eine Abdeckung (7) aufweiset, die aus einem mit dem Formboden in Kontakt stehenden Stück ausgeführt ist.

2. Anordnung nach Anspruch 1, **dadurch gekennzeichnet, dass** sie ein Isolationsstück aufweist, das aus Kunststoffmaterial des Typs Acetal-Copolymer ausgeführt ist und insbesondere einem Polyacetal, das unter der Bezeichnung natürliches POM bekannt ist.

3. Anordnung nach Anspruch 2, **dadurch gekennzeichnet, dass** der Boden (2) einen Kreislauf (8) für den Durchgang eines Wärmeaustauschfluids aufweist, wobei der Kreislauf (8), der in seiner Dicke gewendet geschnitten ist und von der der ausgesparten Fläche gegenüberliegenden Seite mit der Abdeckung (7) bedeckt ist, die eine Eingangsleitung (10) und eine Rückführleitung (11) für das Wärmeaustauschfluid aufweist, wobei die Abdeckung (7), die zwischen dem Boden (2) und dem Gleitschlitten (5) eingefügt ist, das Isolationsstück der Unterstützung ausbildet, um zum einen eine Unterbrechung der Wärmebrücke zwischen dem ausgeschnittenen Boden (2) und dem Gleitschlitten (5) einzuführen und zum anderen einen besseren Wärmeaustausch mit dem Wärmeaustauschfluid auf Höhe des Bodens (2) zu gewährleisten.

4. Anordnung nach Anspruch 3, dadurch gekennzeichet, dass die Abdeckung (7) des Formbodens (2) eine spanende Formgebung in Form eines Absatzes (16) aufweiset, um einen Ring (15) auszunehmen, der mit Kreisbogensegmenten (13) zusammenwirkt, die an den Formhälften angeordnet sind, um den Formboden (2) mit letzteren zu verriegeln, wobei der Verriegelungsring (15) ebenso aus isolierendem Kunststoffmaterial ausgebildet ist.

5. Anordnung nach Anspruch 4, **dadurch gekennzeichnet, dass** der Ring (15) aus einem thermoplastischem Material des Typs PEI (polyetherimid) ausgebildet ist.

6. Anordnung nach Anspruch 4, **dadurch gekennzeichnet, dass** der Ring (15) aus einem Material des Typs PPS (Polyphenylensulfid) ausgebildet ist.

7. Anordnung nach einem der Ansprüche 3 oder 4, **dadurch gekennzeichnet, dass** sie zwischen der Abdeckung (7) des Formbodens (2) und dem Gleitschlitten (5) eine Abstandshülse (20, 20') aufweist, die es ermöglicht, den Aufbau der Unterstützung zu verändern und ihn an den Typ der Form anzupassen, und zwar bei einem Wechsel der Formen und/oder einer Umstellung der Abmessungen der zu formende Artikel, wobei die Abstandshülse (20, 20') ebenso aus isolierendem Kunststoffmaterial ausgebildet sein kann, wie zum Beispiel natürlichem POM.

8. Anordnung nach Anspruch 1, **dadurch gekennzeichnet, dass** die Unterstützung aufweist:
- einen feststehenden Abschnitt, der einen an einem Gleitschlitten (5) befestigten Sockel (32) aufweiset, wobei der Gleitschlitten selbst mit einem Träger (4) der Formenhaiterungseinheit verbunden ist,
- einen abnehmbaren austauschbaren Abschnitt, der mit Formhälften (1) der Form zusammenwirkt,
- ein Mittel zum Montieren der zwei Abschnitte, wobei der abnehmbar Abschnitt, der als austauschbare Unterstützung dient, mindestens ausgebildet ist aus:
- einer Fußplatte (34), die mit dem Sockel (32) des feststehenden Abschnitts zusammenwirkt,
- einer Abdeckung (7), auf der ein Formboden (2) befestigt ist,
und wobei der austauschbare Abschnitt mindestens ein Isolationsstück aufweist, das als Unterbrechung der Wärmebrücke zwischen zum einen dem Boden (2) und zum anderen der Fußplatte zu dient,
und dass das mindestens eine Stück aus isolierendem Material die Abdeckung (7) aufweist, die aus einem Stück ausgebildet ist.

9. Anordnung nach Anspruch 8, **dadurch gekennzeichnet, dass** sie zudem ein Isolationsstück aufweist, das als eine Abstandshülse (20, 20') ausgebildet ist.

10. Anordnung nach Anspruch 9, **dadurch gekennzeichnet, dass** die Abstandshülse (20') zum einen mit einem zentralen Kanal (30) ausgestattet ist, der ermöglicht, das Wärmeaustauschfluid ausgehend von der Fußplatte (34) und dem Sockel (32) durch die Abdeckung (7) direkt zu der Mitte des Formbodens (2) zuzuführen und zum anderen mit einer Vielzahl von Kanälen, die parallel zu dem zentralen Kanal (30) sind und mindestens einer der Kanüle, der Kanal (31), zur Rückführung des Wärmeaustauschfluids verwendet wird.

11. Anordnung nach einem der Ansprüche 9 oder 10, **dadurch gekennzeichnet, dass** sie Montageflansch (21', 22') aufweist, die jeweils zwischen zum einen der Abdeckung (7) des Formbodens (2) und der Abstandshülse (20, 20') und zum anderen zwischen letzterer und fallabhängig dem -Gleitschlitten (5) oder der Fußplatte (34), die auf dem Sockel (32) zu befestigen ist, eingefugt ist.

12. Anordnung nach einem der Ansprüche 8 bis 11, in der die Abdeckung (7) angeordnet ist, um als Sitz für einen Verriegelungsring (15) des Formbodens (2) auf den zwei Formhälften (1) zu dienen.

13. Blasformmaschine, die mit einer Vielzahl von Formeinheiten ausgestattet ist, die jeweils auf einem Träger angeordnet sind, der die Form und insbesondere eine Form trägt, die aus zwei Formhälften (1) und einem Formboden (2) ausgebildet ist, wobei der Formboden (2) mittels einer Unterstützung (6) getragen wird, die selbst auf einem mit dem Träger (4) verbundenen Gleitschlitten (5) befestigt ist, **dadurch gekennzeichnet, dass** mindestens eine der Fermeinheiten eine Anordnung nach einem der Ansprüche 1 bis 12 aufweist.
